(19) Europäisches Patentamt
European Patent Office
Office européen des brevets

(11) **EP 0 648 571 B1**

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(51) Int. Cl.$^6$: **B23K 11/24**

(21) Anmeldenummer: **94114406.5**

(22) Anmeldetag: **14.09.1994**

(54) **Verfahren zum Widerstandsschweissen dünner Bleche und Anordnung zur Durchführung des Verfahrens**

Procedure of resistance welding of thin sheets and arrangement for the realization of the procedure

Procédé pour le soudage électrique par résistance de plaques de métal minces et disposition pour la réalisation du procédé

(84) Benannte Vertragsstaaten:
**AT BE CH DE DK ES FR GB GR IE IT LI LU NL PT SE**

(30) Priorität: **18.09.1993 DE 4331826**

(43) Veröffentlichungstag der Anmeldung:
**19.04.1995 Patentblatt 1995/16**

(73) Patentinhaber: **SIBEA GmbH Ingenieurbetrieb für Elektroautomation**
**D-08056 Zwickau (DE)**

(72) Erfinder: **Klärner, Thomas, Dr. Ing.**
**D-08064 Zwickau (DE)**

(74) Vertreter: **Thoss, Eberhard**
**Patentanwalt**
**Am Wiesengrund 7**
**08146 Ortmannsdorf/Marienau (DE)**

(56) Entgegenhaltungen:
**EP-A- 0 033 962        EP-A- 0 064 570**
**DD-A-  285 701        DE-C- 4 113 117**

• **PATENT ABSTRACTS OF JAPAN vol. 6, no. 109 (M-137) 19. Juni 1982 & JP-A-57 039 077 (MITSUBISHI HEAVY IND LTD) 4. März 1982**
• **DATABASE WPI Week 8334, Derwent Publications Ltd., London, GB; AN 83-746033 & SU-A-967 734 ((CHTR)CHELY TRACTOR WKS ET AL) 23. Oktober 1982**

**Beschreibung**

Die Erfindung betrifft ein Verfahren zum Widerstandsschweißen gemäß dem Oberbegriff des Anspruchs 1, insbesondere zur Herstellung dünnwandiger Blechemballagen auf Rollennahtschweißmaschinen, und eine Anordnung zur Durchführung des Verfahrens.

Bekannt sind unter anderem Verfahren unter Verwendung eines mittelfrequenten, annähernd sinusförmigen Schweißstromes. Diese Verfahren sind in der Literatur in großer Anzahl beschrieben. Die Schweißströme werden entweder mittels rotatorischer Umformer oder statischer Umrichter erzeugt. Diese Verfahren besitzen den Nachteil hoher Wirbelstrom- und Hysteresisverluste auf Grund der hohen Frequenzen der verwendeten Ströme bzw. ihrer Spektralanteile. Es ergibt sich hieraus ein schlechter Maschinenwirkungsgrad verbunden mit beachtlichem Aufwand für Kühlmaßnahmen an der Schweißmaschine. Weiterhin erfordern diese Verfahren Materialsubstitutionen für kritische Maschinenteile, wie z. B. dem Einsatz von Keramik anstelle metallischer Werkstoffe.

Weiterhin bekannt sind aus DD 285 701, EP 0 064 570 und DE 30 05 083 Verfahren unter Verwendung von niederfrequenten, annähernd rechteckförmigen Schweißströmen. Diese Verfahren vermeiden zwar die hohen Wirbelstrom- und Hysteresisverluste, führen aber bei dünnen Blechen zu unbefriedigenden Schweißnahtqualitäten.

Aus der DE 41 13 117 C1 ist ein Verfahren bekannt, bei dem Schweißströme, die von der Sinusform abweichen, verwendet werden. Die Frequenz liegt vorzugsweise im Bereich von 250 bis 500 Hz, wobei deren Halbwellen mit weiteren von der Sinusform abweichenden Stromanteilen überlagert sind. Diese Verfahren erlauben zwar das Schweißen von problematischen Materialien, führen aber ebenfalls zu hohen Wirbelstrom- und Hysteresisverlusten auf Grund der gewählten Stromformen und der damit verbundenen Amplituden der höheren Spektralanteile.

Beim Schweißen dünner Bleche mit hohen Geschwindigkeiten ist es erforderlich, daß die einzelnen Volumenelemente des Schweißgutes während des Schweißvorganges mehrere Erwärmungs- und Abkühlphasen durchlaufen. Nach dem Stand der Technik wird das dadurch erreicht, indem ein vorzugsweise sinusförmiger Schweißstrom verwendet wird, dessen Frequenz in Abhängigkeit von Schweißgeschwindigkeit und Elektrodengeometrie so hoch gewählt wird, daß sich die erforderliche Anzahl von Erwärmungs- und Abkühlphasen in dem Zeitintervall ergibt, in dem sich das einzelne Volumenelement im Kontaktbereich der Elektroden befindet. Die sich daraus ergebenden hohen Stromänderungsgeschwindigkeiten führen über das sich ausbildende Magnetfeld des Schweißstromes zu den erwähnten hohen Verlusten.

Aufgabe der Erfindung ist es, ein Verfahren und eine Vorrichtung zu dessen Durchführung der eingangs genannten Art zu schaffen, durch die sich die Wirbelstrom- und Hysteresisverluste minimieren lassen und eine hohe Nahtqualität auch bei problematischen Blechen erreicht wird.

Diese Aufgabe ist ausgehend von einem Verfahren der eingangs genannten Art erfindungsgemäß dadurch gelöst, daß die Stromdichte in den vom Schweißstrom durchflossenen Volumenelementen des Schweißgutes, mittels eines auf das Magnetfeld des Schweißstromes einwirkenden weiteren Magnetfeldes, mit einer Frequenz f2, moduliert wird. In Abhängigkeit von Material- und Maschinenparametern wird der Modulationsgrad der Schweißstromdichte mittels des Verhältnisses der Stromamplituden I2/I1 derart beeinflußt, daß sich bei optimaler Schweißnahtqualität minimale Wirbelstromverluste ergeben.

Die Schweißstromquelle, bestehend aus einem statischen Umrichter und einem Schweißtransformator, liefert vorzugsweise einen annähernd rechteckförmigen, niederfrequenten Schweißstrom mit der Frequenz f1 und der Amplitude I1 derart, daß das Frequenzverhältnis f2/f1 ganzzahlig und ungerade ist, indem die Schweißstromquelle vorzugsweise über einen Sollwerteingang von einer Synchronisiereinheit mit dem Spulenstrom synchronisiert wird.

Die Synchronisiereinheit enthält einen einstellbaren Frequenzteiler, welcher aus der Frequenz f2, des das weitere Magnetfeld erzeugenden Stromes, die Frequenz f1 des Schweißstromes derart erzeugt, daß sich ein vorzugsweise ganzzahliges, ungerades Frequenzverhältnis f2/f1 ergibt, und der Ausgang des Frequenzteilers über einen Impulsformer mit dem Sollwerteingang der Schweißstromquelle verbunden ist.

Die Spulenstromform ist mittels einer Sollwerttabelle vorwählbar. Der Spulenstrom kann von der Sinusform abweichen.

Die Frequenz f2 des weiteren Magnetfeldes wird in Abhängigkeit von der Schweißgeschwindigkeit und der Elektrodengeometrie derart gesteuert, daß jedes Volumenelement des Schweißgutes während des Schweißvorganges eine bestimmte Anzahl von Erwärmungs- und Abkühlphasen durchläuft.

Die Anordnung besteht im wesentlichen aus einer an sich bekannten Schweißstromquelle und einem System, welches das weitere Magnetfeld erzeugt und aus einer Spule und einem Kern gebildet wird. Die Spule wird von einem vorzugsweise sinusförmigen Strom mit der Frequenz f2 und der Amplitude I2 durchflossen.

Die Spule kann von einem nichtsinusförmigen Strom durchflossen werden.

Die Schweißstromquelle ist über einen Sollwerteingang an eine Synchronisiereinheit angeschaltet. Die Synchronisiereinheit enthält einen einstellbaren Frequenzteiler. Der Ausgang des Frequenzteilers ist über einen Impulsformer mit dem Sollwerteingang der Schweißstromquelle verbunden. Die Synchronisiereinheit enthält zwischen dem Frequenzteiler und dem Impulsformer einen Phasenschieber, welcher eine beliebige Phasenverschiebung zwischen seinem Ein- und Ausgangssignal, und damit zwischen dem Spulenstrom und dem Schweißstrom realisiert.

Der Kern, des das weitere Magnetfeld erzeugenden Systems, ist aus weichmagnetischem Ferritmaterial ausgebildet.

Der Kern, des das weitere Magnetfeld erzeugenden Systems, kann als ferromagnetischer Masseeisenkern ausgebildet sein.

Das System, zur Erzeugung des weiteren Magnetfeldes, wird z. B. bei Rollennahtwiderstandsschweißmaschinen zur Herstellung von Dosenzargen vorteilhaft in den Rollenkorb, bzw. in ein anderes, vorhandenes Kalibrierwerkzeug derart integriert, daß eine kompakte Baueinheit entsteht.

Das weitere Magnetfeld wird von einem Spulensystem erzeugt, in welchem ein Strom fließt, dessen Verlauf in einem Speicher in Tabellenform abgelegt ist. Der Verlauf des Spulenstromes ist in normierter Form in einem Speicher abgelegt und die tatsächlichen Werte des momentanen Spulenstromes werden dadurch gebildet, indem diese normierten Werte in einem Multiplizierer mit einem einstellbaren Faktor entnormiert werden.

Verschiedene Stromverläufe sind in einem Speicher derart abgespeichert, daß für jede Stromform eine eigene Tabelle existiert, welche einzeln selektiert werden kann.

Die gespeicherten bzw. entnormierten Spulenstromwerte werden einem Regelverstärker als Sollwerte zugeführt. Dieser Verstärker erzeugt an seinem Ausgang einen geregelten Strom, welcher durch das Spulensystem fließt und dadurch das weitere Magnetfeld erzeugt.

Eine Schweißstromquelle wird mittels einer Synchronisiereinheit durch die Spulenstromwerte derart synchronisiert, daß ein festes, einstellbares Verhältnis der Frequenzen von Schweißstrom und Spulenstrom, sowie eine gewünschte Phasenbeziehung zwischen beiden Strömen erreicht wird.

Mittels eines Magnetfeldes wird Einfluß auf die Stromdichte im Schweißgut genommen.

Beim Schweißen dünner Bleche mit hohen Geschwindigkeiten ist es erforderlich, daß die einzelnen Volumenelemente des Schweißgutes während des Schweißvorganges mehrere Erwärmungs- und Abkühlphasen durchlaufen. Die erforderlichen Erwärmungs- und Abkühlphasen werden nicht durch Stromänderungen, sondern bei annähernd konstantem Strom durch Änderungen der Stromdichte bewirkt. Dabei überlagert sich das Magnetfeld des Schweißstromes mit einem zusätzlich erzeugten, äußeren Magnetfeld. Diese Überlagerung führt zu einer Änderung des vom Strom durchflossenen Querschnitts und damit zu einer Beeinflussung der Stromdichte im betrachteten Volumenelement.

Durch die Beeinflussung der Frequenz f2 kann damit die Anzahl der erforderlichen Erwärmungs- und Abkühlphasen festgelegt werden.

Die aufgeführte Möglichkeit, den Modulationsgrad mittels des Amplitudenverhältnisses I2/I1 zu beeinflussen, stellt eine Möglichkeit dar, den Verlauf des Wärmeeintrages über die Schweißnaht zu steuern. Dabei bestimmt der Wert von I1 in erster Linie die Höhe der gesamten dem Schweißgut zuzuführenden Energie, während mittels I2 auf die Verteilung dieser Energie Einfluß genommen werden kann.

Da mittels Beeinflussung von f2 und I2 praktisch keine Schweißstromänderungen verursacht werden, ergeben sich extrem niedrige Wirbelstrom- und Hysteresisverluste bei gleichzeitig hoher Schweißnahtqualität.

Das weitere Magnetfeld wird vorzugsweise mittels eines sinusförmigen Stromes in einer Spule erzeugt. Durch Verwendung einer anderen Stromform in der Spule lassen sich jedoch auch andere unterschiedliche Verläufe des Wärmeeintrages in das Schweißgut realisieren. Somit ergibt sich die Möglichkeit, auch problematische Materialien zu verschweißen ohne dabei hohe Verluste zu verursachen wie es beim Stand der Technik der Fall ist.

Die geregelte Schweißstromquelle liefert einen Strom, dessen Höhe annähernd unabhängig von Schwankungen der Lastimpedanz ist. Damit ist sichergestellt, daß die Beeinflussung der Stromdichte, mittels eines weiteren Magnetfeldes, keinen nennenswerten Einfluß auf die Höhe des momentanen Schweißstromes hat.

Durch die Verwendung eines Frequenzteilers ergibt sich ein konstantes Frequenzverhältnis f2/f1. Das ist vorteilhaft, um gleichbleibende Wärmeeinträge über die gesamte Naht zu erreichen. Speziell beim Polaritätswechsel des Schweißstromes ergeben sich so stets gleichbleibende thermische Verhältnisse.

Mittels des Phasenschiebers ist eine Beeinflussung des Verlaufs des Wärmeeintrages speziell zu den Zeitpunkten des Polaritätswechsels des Schweißstromes möglich. Auf Grund der induktiven Zeitkonstante der Lastimpedanz der Schweißstromquelle, ergibt sich eine endliche Stromänderungsgeschwindigkeit und damit verbunden eine bestimmte erforderliche Zeit für den Polaritätswechsel des Schweißstromes. Durch eine Änderung der Phasenlage zwischen dem Schweißstrom und dem das weitere Magnetfeld erzeugenden Stromes in der Spule, läßt sich ein Wärmeeinbruch während der Polaritätswechsel vermeiden und eine gleichbleibend hohe Schweißnahtqualität sichern.

Weiterhin läßt sich mittels dieses Phasenschiebers eine andere Phasenverschiebung kompensieren, welche durch die komplexe Impedanz des, das weitere Magnetfeld erzeugenden Systems, bedingt ist.

In der Ausgestaltung der Erfindung läßt sich eine günstige konstruktive Einbindung des Systems zur Erzeugung des weiteren Magnetfeldes, in die Maschinenkonstruktion erreichen. Vorteilhaft ist dabei, den Kern des Magnetsystems derart in das vorhandene Kalibrierwerkzeug (Rollenkorb) z. B. einer Rollennahtwiderstandsschweißmaschine zu integrieren, daß dieser die zu schweißende Blechzarge umschließt und im Bereich der Schweißzone einen geeigneten Spalt besitzt. Auf Grund der zu vernachlässigenden Wirbelstromverluste ergibt sich außerdem die Möglichkeit einer vereinfachten Rollenkorbkonstruktion.

In der Ausgestaltung der Erfindung läßt sich erreichen, daß praktisch jede denkbare, sinnvolle Spulenstromform, und damit verbunden jede denkbare sinnvolle Ausbildung des weiteren Magnetfeldes auf einfache Weise realisiert werden kann. Dabei wird lediglich die Tabelle mit der gewünschten Spulenstromform im Speicher selektiert und die Schweißstromquelle über die genannte Synchronisiereinrichtung mit dem Spulenstrom und damit mit dem weiteren Magnetfeld synchronisiert.

Ausführungsbeispiele der Erfindung werden im folgenden unter Bezugnahme auf die Zeichnungen näher beschrieben.

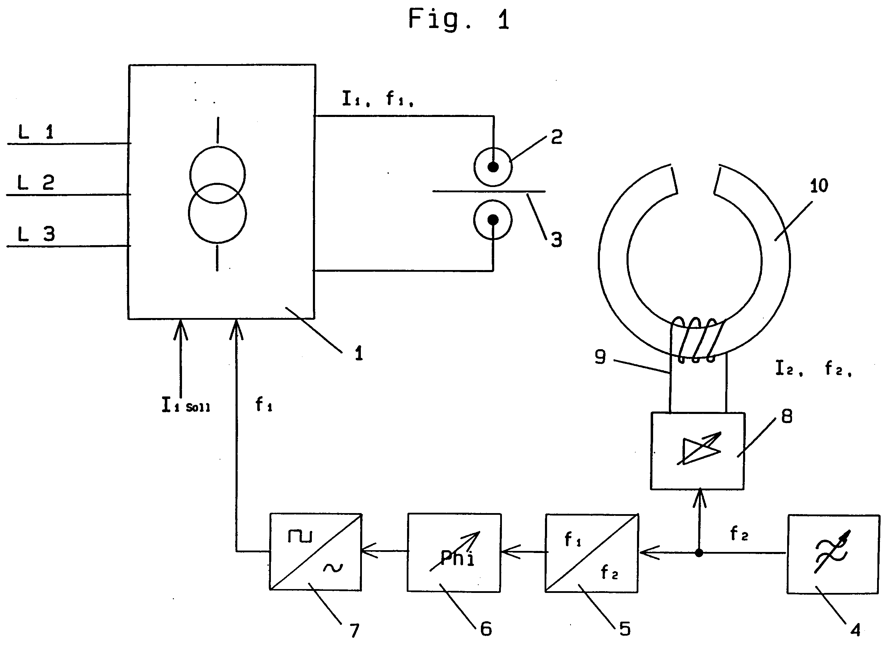

In Fig. 1 ist die prinzipielle Anordnung zur Durchführung des Verfahrens dargestellt. Eine Schweißstromquelle 1 erzeugt einen beispielsweise annähernd rechteckförmigen Schweißstrom der Frequenz f1 mit der Amplitude I1.

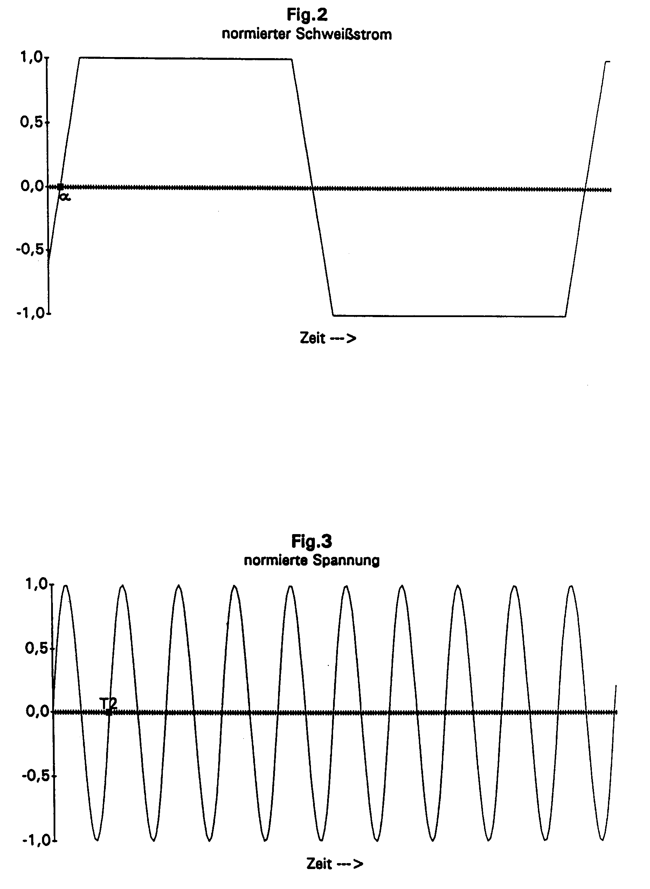

In Fig. 2 ist dieser Verlauf prinzipiell dargestellt. Dieser Schweißstrom wird den Rollenelektroden 2 einer Schweißmaschine zugeführt, zwischen denen sich das zu verschweißende Material 3 befindet.

Eine sinusförmige Spannung mit der Frequenz f2 wird dabei beispielsweise von einem einstellbaren Generator 4 erzeugt. Diese Frequenz f2 ergibt sich dabei zu 1/T2.

In Fig. 3 ist der Verlauf dieser Spannung prinzipiell dargestellt. Diese Spannung wird **erstens** einem einstellbaren Frequenzteiler 5 zugeführt, welcher die Frequenz f2 beispielsweise im Verhältnis 1:9 teilt. Am Ausgang des Frequenzteilers 5 steht eine Spannung mit der Frequenz f1=f2/9 zur Verfügung.

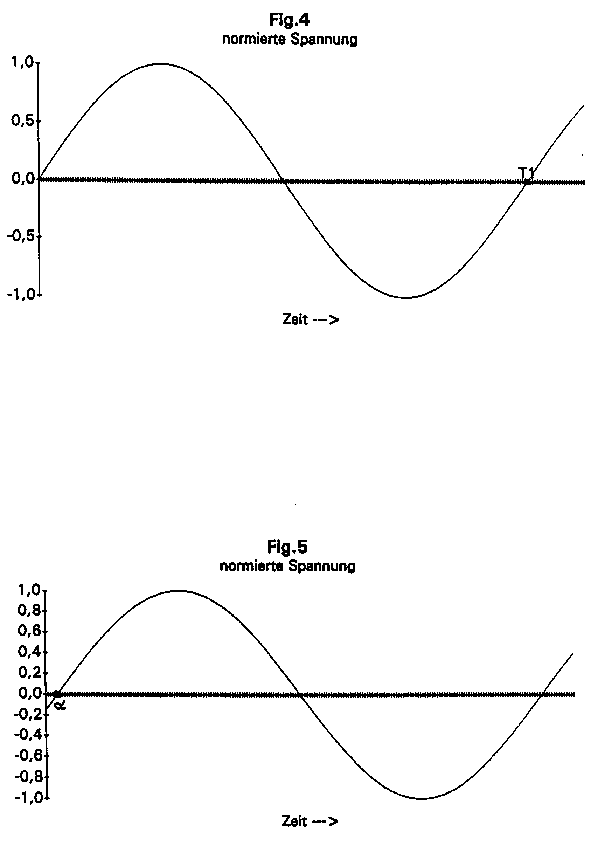

Die Frequenz f1 ergibt sich dabei zu 1/T1. Diese Spannung ist prinzipiell in Fig. 4 gezeigt und wird einem Phasenschieber 6 zugeführt, welcher eine beliebige, einstellbare Phasenverschiebung α, zwischen seinem Ein- und Ausgangssignal gestattet.

Das Ausgangssignal des Phasenschiebers 6 ist prinzipiell in Fig. 5 dargestellt und wird einem Impulsformer 7 zugeführt. Der Impulsformer 7 hat die Aufgabe, die sinusförmige Ausgangsspannung des Phasenschiebers in eine beispielsweise rechteckförmige Spannung umzuformen und diese der Schweißstromquelle 1 als Sollwert zuzuführen.

Die Baugruppen 5, 6 und 7 bilden somit eine Einheit zur Synchronisation der Schweißstromquelle 1 mit dem weiteren Magnetfeld. Ein weiteres Eingangssignal der Schweißstromquelle 1 mit der Bezeichnung I1soll liefert die Sollwertinformation bezüglich der Amplitude I1 des Schweißstromes und wird innerhalb der Schweißstromquelle 1 multiplikativ mit dem Ausgangssignal des Impulsformers 7 verknüpft.

Die Ausgangsspannung des Frequenzgenerators 4 wird **zweitens** einem Verstärker 8 zugeführt. Dieser Verstärker 8 besitzt eine einstellbare Verstärkung und erzeugt an seinem Ausgang eine Spannung, welche einer Spule 9 zugeführt wird. Diese Spannung erzeugt einen Strom mit der Frequenz f2 und der Amplitude I2 welcher auf Grund der komplexen Impedanz des, das weitere Magnetfeld erzeugenden Systems, eine Phasenverschiebung β gegenüber der Ausgangsspannung des Verstärkers 8 besitzt.

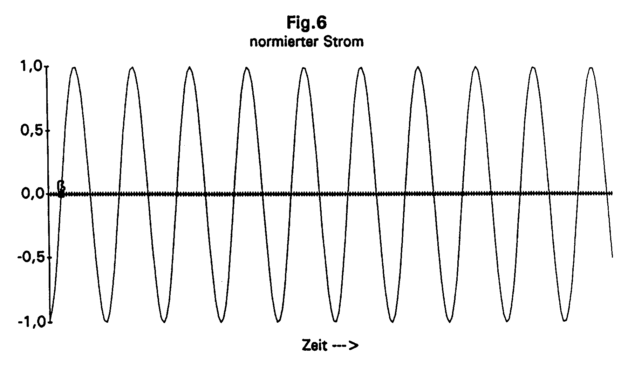

In Fig. 6 ist der Verlauf dieses Stromes dargestellt. Die Phasenverschiebung α wurde im Ausführungsbeispiel dabei so gewählt, daß damit gerade die Phasenverschiebung β kompensiert wird. Der in Fig. 6 gezeigte Strom erzeugt in Verbindung mit der Spule 9 und dem Kern 10 ein Magnetfeld, welches sich mit dem vom Schweißstrom verursachten Magnetfeld überlagert und damit die Stromdichte moduliert.

## Patentansprüche

1. Verfahren zum Widerstandsschweißen dünner Bleche mit in periodischen Halbwellen pulsierendem, insbesondere wechselndem Schweißstrom, der aus einer Primärwechselspannung eines Schweißtransformators erzeugt wird,
dadurch gekennzeichnet, daß
die Stromdichte in den vom Schweißstrom durchflossenen Volumenelementen des Schweißgutes (3), mittels eines auf das Magnetfeld des Schweißstromes einwirkenden weiteren Magnetfeldes, mit einer Frequenz f2, moduliert wird.

2. Verfahren nach Anspruch 1,
dadurch gekennzeichnet, daß
die Schweißstromdichte in Abhängigkeit von Material- und Maschinenparametern mittels des Verhältnisses der Stromamplituden I2/I1 moduliert wird.

3. Verfahren nach Anspruch 1 und 2,
dadurch gekennzeichnet, daß
der Schweißstrom und der das weitere Magnetfeld erzeugende Spulenstrom synchronisiert werden.

4. Verfahren nach Anspruch 1 bis 3,
dadurch gekennzeichnet, daß
als Verhältnis zwischen der Frequenz f2 des Spulenstromes und der Frequenz f1 des Schweißstromes ein vorzugsweise ganzzahliges ungerades Frequenzverhältnis gewählt wird.

5. Verfahren nach Anspruch 1 bis 4,
dadurch gekennzeichnet, daß
die Spulenstromform mittels einer Sollwerttabelle vorwählbar ist.

6. Verfahren nach Anspruch 1 bis 5,
dadurch gekennzeichnet, daß
der Spulenstrom von der Sinusform abweicht.

7. Verfahren nach Anspruch 1 bis 6,

dadurch gekennzeichnet, daß
jedes Volumenelement des Schweißgutes während des Schweißvorgangs n Erwärmungs- und Abkühlungsphasen durchläuft, wobei n abhängig von der Frequenz f2 ist.

8. Anordnung zur Durchführung des Verfahrens nach einem der Ansprüche 1 bis 7, umfassend eine

   Schweißstromquelle (1) und ein System, welches das weitere Magnetfeld erzeugt und aus einer Spule (9) und einem Kern (10) besteht und ferner Mittel (8) umfaßt, durch welche die Spule (9) von einem vorzugsweise sinusförmigen Strom mit einer Frequenz f2 und einer Amplitude I2 durchflossen wird.

9. Anordnung nach Anspruch 8,
   dadurch gekennzeichnet, daß
   die Spule (9) von einem nichtsinusförmigen Strom durchflossen wird.

10. Anordnung nach Anspruch 8,
    dadurch gekennzeichnet, daß
    die Schweißstromquelle (1) über einen Sollwerteingang an eine Synchronisiereinheit (5,6,7) angeschaltet ist.

11. Anordnung nach Anspruch 8 und 10,
    dadurch gekennzeichnet, daß
    die Synchronisiereinheit einen einstellbaren Frequenzteiler (5) enthält.

12. Anordnung nach Anspruch 8, 10 und 11,
    dadurch gekennzeichnet, daß
    der Ausgang des Frequenzteilers (5) über einen Impulsformer (7) mit dem Sollwerteingang der Schweißstromquelle (1) verbunden ist.

13. Anordnung nach Anspruch 8 und 10 bis 12,
    dadurch gekennzeichnet, daß
    in der Synchronisiereinrichtung zwischen dem Frequenzteiler (5) und dem Impulsformer (7) ein Phasenschieber (6) geschaltet ist.

14. Anordnung nach Anspruch 8,
    dadurch gekennzeichnet, daß
    der Kern (10), des das weitere Magnetfeld erzeugenden Systems, aus weichmagnetischem Ferritmaterial ausgebildet ist.

15. Anordnung nach Anspruch 8,
    dadurch gekennzeichnet, daß
    der Kern (10), des das weitere Magnetfeld erzeugenden Systems als ferromagnetischer Masseeisenkern ausgebildet ist.

16. Anordnung nach Anspruch 8,
    dadurch gekennzeichnet, daß

das System, zur Erzeugung des weiteren Magnetfeldes, in einen Rollenkorb, bzw. ein anderes, vorhandenes Kalibrierwerkzeug der Schweißmaschine, derart integriert wird, daß eine kompakte Baueinheit entsteht.

17. Anordnung nach Anspruch 8,
    dadurch gekennzeichnet, daß
    das weitere Magnetfeld von einem Spulensystem (9) erzeugt wird, in welchem ein Strom fließt, dessen Verlauf in einem Speicher in Tabellenform abgelegt ist.

18. Anordnung nach Anspruch 17,
    dadurch gekennzeichnet, daß
    der Verlauf des Spulenstromes in normierter Form in einem Speicher abgelegt ist und die tatsächlichen Werte des momentanen Spulenstromes dadurch gebildet werden, indem diese normierten Werte in einem Multiplizierer mit einem einstellbaren Faktor entnormiert werden.

19. Anordnung nach den Ansprüchen 17 oder 18,
    dadurch gekennzeichnet, daß
    verschiedene Stromverläufe gleichzeitig in einem Speicher derart abgespeichert sind, daß für jede Stromform eine eigene Tabelle existiert, welche einzeln selektiert werden kann.

20. Anordnung nach einem der Ansprüche 17 bis 19,
    dadurch gekennzeichnet, daß
    die gespeicherten bzw. entnormierten Spulenstromwerte einem Regelverstärker (8) als Sollwerte zugeführt werden, und dieser Verstärker an seinem Ausgang einen geregelten Strom erzeugt, welcher durch das Spulensystem (9) fließt und dadurch das äußere Magnetfeld erzeugt.

21. Anordnung nach einem der Ansprüche 17 bis 20,
    dadurch gekennzeichnet, daß
    eine Schweißstromquelle (1) mittels einer Synchronisiereinheit (5,6,7) durch die Spulenstromwerte derart synchronisiert wird, daß ein festes, einstellbares Verhältnis der Frequenzen von Schweißstrom und Spulenstrom, sowie eine gewünschte Phasenbeziehung zwischen beiden Strömen erreicht wird.

22. Anwendung des Verfahrens nach einem der Ansprüche 1 bis 7 beim Platinenschweißen.

23. Anwendung des Verfahrens nach einem der Ansprüche 1 bis 7 beim Punktschweißen.

24. Anwendung des Verfahrens nach einem der Ansprüche 1 bis 7 beim Rollennahtwiderstandsschweißen.

## Claims

1. Process of resistance seam welding of sheet metals by an especially alternating welding current pulsating in periodic half-waves generated by a primary alternating voltage of a welding transformer,
   being characterized for the current density in the volume elements of the weld metal (3),
   passed by the welding current to be modulated by means of another magnetic field of a frequency f2 effecting the magnetic field of the welding current

2. Process according to claim 1,
   being characterized for the welding current density to be modulated in dependence on the characteristic values of the material and machine by means of the current amplitudes ratio I2/I1

3. Process according to claims 1 and 2,
   being characterized for the welding current and the coil current generating the other magnetic field to be synchronized

4. Process according to claims 1 to 3,
   being characterized for a preferably integral odd frequency ratio to be selected for the ratio of the frequency f2 of the coil current and the frequency f1 of the welding current

5. Process according to claims 1 to 4,
   being characterized for the coil current waveform to be preset by means of a rated value table

6. Process according to claims 1 to 5,
   being characterized for the coil current to differ from the sine form

7. Process according to claims 1 to 6,
   being characterized for each volume element of the weld metal to pass heating and cooling phases during the welding operation n with n depending on the frequency f2

8. Arrangement to carry out the process according to one of the claims 1 to 7 including a welding current source (1) and a system generating the other magnetic field and consisting of a coil (9) and a core (10) and including mediums (8), too, by which the coil (9) is passed by a preferably sinusoidal current of a frequency f2 and an amplitude I2

9. Arrangement according to claim 8,
   being characterized for the coil (9) to be passed by a non-sinusoidal current

10. Arrangement according to claim 8,
    being characterized for the welding current source (1) to be connected to a synchronizing unit (5,6,7) by a rated value input

11. Arrangement according to claims 8 and 10,
    being characterized for the synchronizing unit to include an adjustable frequency divider (5)

12. Arrangement according to claims 8, 10, and 11,
    being characterized for the output of the frequency divider (5) to be connected to the rated value input of the welding current source (1) by a pulse shaper

13. Arrangement according to claims 8 and 10 to 12,
    being characterized for a phase changer (6) to be inserted between the frequency divider (5) and the pulse shaper (7) in the synchronizing unit

14. Arrangement according to claim 8,
    being characterized for the core (10) of the system generating the other magnetic field to be made from soft magnetic ferrite material

15. Arrangement according to claim 8,
    being characterized for the core (10) of the system generating the other magnetic field to be formed as a ferromagnetic mass-iron core

16. Arrangement according to claim 8,
    being characterized for the system for generating the other magnetic field in a roller cage or another available calibration tool of the welding machine to be integrated in such a way for a compact unit to be the result

17. Arrangement according to claim 8,
    being characterized for the other magnetic field being generated by a coil system (9) where a current passes and the course of which to be stored in a tabular form in a storage unit

18. Arrangement according to claim 17,
    being characterized for the course of the coil current to be stored in a normalized form in a storage unit and the effective values of the instantaneous coil current to be generated by denormalizing these normalized values by a variable in a multiplier

19. Arrangement according to claims 17 or 18,
    being characterized for different current courses to be simultaneously stored in such a way in a storage unit so that there is a seperate table for each current waveform which can be selected separately

20. Arrangement according to one of the claims 17 to 19,
    being characterized for the coil current values stored or denormalized to be supplied to a variable-gain amplifier (8) as rated values and for this amplifier generating a regulated current at its output passing the coil system (9) and thereby, generating the external magnetic field

21. Arrangement according to one of the claims 17 to 20,
being characterized for a welding current source (1) to be synchronized by the coil current values by means of a synchronizing unit (5,6,7) in such a way that a fixed, adjustable ratio of the frequencies of the welding current and the coil current, and a desired phase relation between the two currents is reached as well

22. Application to process according to one of the claims 1 to 7 in sheet bar welding

23. Application to process according to one of the claims 1 to 7 in spot welding

24. Application to process according to one of the claims 1 to 7 in seam resistance welding

**Revendications**

1. Méthode de soudage électrique par résistance de feuilles de tôle mince par un courant le plus souvent alternatif oscillant en demi-ondes périodiques, produit par la tension alternative primaire d'un transformateur de soudage, et qui se caractérise par le fait que l'intensité du courant est modulée dans le matériel à souder (3) par un champ magnétique supplémentaire placé sur le champ magnétique du courant de soudage et ayant effet sur celui-ci avec une fréquence f2.

2. Méthode comme dans le descriptif 1, mais avec modulation de l'intensité du courant de soudage en corrélation avec les paramètres des machines et du matériel grâce à la proportion des amplitudes de courant I2/I1.

3. Méthode comme dans les descriptifs 1 et 2, mais avec synchronisation du courant de soudage et du courant de la bobine produisant l'autre champ magnétique.

4. Méthode comme dans les descriptifs 1 à 3, mais avec un choix de la proportion entre les fréquences f2 du courant de la bobine et f1 du courant de soudage de préférence d'un nombre entier impair.

5. Méthode comme dans les descriptifs 1 à 4, mais avec la possibilité de choisir la forme du courant de bobine grâce à un tableau des consignes.

6. Méthode comme dans les descriptifs 1 à 5, mais avec déviation de la forme sinusoidale du courant de bobine.

7. Méthode comme dans les descriptifs 1 à 6, mais avec n phases de refroidissement et de réchauffement de chaque élément du matériel à souder pendant le soudage, avec dépendance de n de la fréquence f2.

8. Disposition réglant l'exécution de la méthode décrite dans l'un des descriptifs 1 à 7, comportant la source du courant de soudage (1) et un système produisant un champ magnétique suplémentaire, composé d'une bobine (9) et d'un noyau (10) et de moyens (8) qui permettent à la bobine (9) d'être traversée par un courant de préférence sinusoidal d'une fréquence f2 et d'une amplitude I2.

9. Disposition pour le descriptif 8, d'après lequel la bobine n'est pas traversée par un courant sinusoidal.

10. Disposition pour le descriptif 8, d'après lequel la source de courant de soudage (1) est branchée à une unité de synchronisation (5, 6, 7) précédée d'une entrée des consignes.

11. Disposition pour les descriptifs 8 et 10, d'après lequel l'unité de synchronisation doit être équipée d'un réglage de fréquence (5).

12. Disposition pour les descriptifs 8, 10 et 11, d'après lequel la sortie du régleur de fréquence (5) passe par un réglage des impulsions (7) qui le relie à l'entrée des consignes de la source de courant de soudage (1).

13. Disposition pour les descriptifs 8 et 10 à 12, d'après lequel un déphaseur (6) est installé dans le dispositif de synchronisation entre le régleur de fréquence (5) et l'impulseur (7).

14. Disposition pour le descriptif 8, d'après lequel le noyau (10) du système produisant l'autre champ magnétique est en fer doux ferritique.

15. Disposition pour le descriptif 8, d'après lequel le noyau (10) du système produisant l'autre champ magnétique est un noyau ferromagnétique massif.

16. Disposition pour le descriptif 8, d'après lequel le système produisant l'autre champ magnétique est intégré à la machine de soudage, soit dans une corbeille-rouleau, soit dans un autre calibre déjà existant, de manière à former un ensemble compact.

17. Disposition pour le descriptif 8, d'après lequel l'autre champ magnétique est produit par un système de bobine dans lequel circule un courant dont le cours est régulé d'après les valeurs mémorisées sous forme de tableau.

18. Disposition pour le descriptif 17, d'après lequel la circulation standardisée du courant de bobine est réglée d'après les valeurs mémorisées et les valeurs réelles momentanées du courant de bobine sont produites gràce à une dé-standardisation des valeurs standardisées par un facteur de multiplication réglable.

19. Disposition pour les descriptifs 17 et 18, d'après lequel différentes circulations de courant sont mémorisées simultanément de manière à ce qu'il existe un tableau pouvant être sélectionné séparément pour chaque forme de courant.

20. Disposition pour un des descriptifs 17 à 19, d'après lequel les valeurs dé-standardisées du courant de bobine qui furent mémorisées sont données en tant que consignes à un amplificateur de réglage (8) qui produit un courant régulé circulant dans le système de bobine et produisant le champ magnétique extérieur.

21. Disposition pour un des descriptifs 17 à 20, d'après lequel une source de courant de soudage (1) est synchronisée au moyen d'une unité de synchronisation (5,6,7) par les valeurs du courant de bobine de manière à ce que soit obtenu une proportion sûre et réglable des fréquences du courant de soudage et du courant de bobine, ainsi que des phases des deux courants.

22. Utilisation de la méthode d'après les descriptifs 1 à 7 pour le soudage au platine.

23. Utilisation de la méthode d'après les descriptifs 1 à 7 pour le soudage ponctuel.

24. Utilisation de la méthode d'après l'un des descriptifs 1 à 7 pour le soudage par résistance de soudures roulées.

# Fig. 1

EP 0 648 571 B1

**Fig.2**
normierter Schweißstrom

Zeit --->

**Fig.3**
normierte Spannung

Zeit --->

**Fig.4**
normierte Spannung

Zeit ---->

**Fig.5**
normierte Spannung

Zeit ---->

**Fig.6**
normierter Strom